# DEMANDE DE BREVET EUROPEEN

(11) **EP 0 905 678 A1**
(43) Date de publication de la demande: **31.03.1999**
(21) Numéro de dépôt: 98402371.3
(22) Date de dépôt: 25.09.1998
(51) Int. Cl.: G10L 5/06

(54) **Procédé d'apprentissage dans un système de reconnaissance de parole**

(30) Priorité: 29.09.1997 FR 9712063
(71) Demandeur: Matra Nortel Communications, 29100 Quimper (FR)
(72) Inventeur: Lockwood, Philip, 95490 Vaureal (FR); Glorion, Catherine, 78210 Saint-Cyr-l'Ecole (FR); Lelievre, Laurent, 78760 Jouars-Pontchartrain (FR)
(74) Mandataire: Loisel, Bertrand

(57) **Abrégé**

Un test de reconnaissance fait correspondre un segment de parole fourni au système avec un jeu de paramètres associé à une référence et mémorisé dans un dictionnaire (11). Pour un jeu de paramètres à mémoriser dans le dictionnaire en association avec une référence, on exécute les étapes suivantes : estimer une version provisoire dudit jeu de paramètres sur la base d'un ou plusieurs segments de parole ; mémoriser ladite version provisoire dans le dictionnaire en association avec la référence ; et soumettre au moins une répétition du segment de parole à un test de reconnaissance, après lequel, selon qu'il fait correspondre ou non le segment de parole répété avec la version provisoire, on modifie la version provisoire et on mémorise la version provisoire modifiée.

## Description

La présente invention concerne le domaine de la reconnaissance automatique de la parole. Elle concerne plus particulièrement les systèmes de reconnaissance faisant appel à une procédure d'apprentissage.

Un tel système comprend trois principales unités fonctionnelles : une unité de paramétrisation, une unité d'apprentissage et une unité de reconnaissance.

L'unité de paramétrisation calcule des paramètres pertinents à partir de signaux de parole captés par un microphone. Ces calculs sont effectués conformément à une représentation paramétrique choisie pour différencier au mieux les formes vocales, en séparant l'information sémantique contenue dans la parole de l'information esthétique propre à l'élocution. Une classe importante de telles représentations est constituée par les représentations cepstrales (voir EP-A-0 621 582).

L'unité de reconnaissance réalise l'association entre un segment de parole observé, représenté par les paramètres calculés par l'unité de paramétrisation, et une référence pour laquelle un autre jeu de paramètres est stocké dans un dictionnaire de références. Les jeux de paramètres stockés dans le dictionnaire en association avec les différentes références peuvent définir des modèles déterministes (ils sont par exemple composés directement de vecteurs issus de l'unité de paramétrisation). Mais le plus souvent, pour tenir compte des variabilités de la production de la parole et de l'environnement acoustique, on utilise plutôt des jeux de paramètres caractérisants des modèles stochastiques. Une classe importante de tels modèles est constituée par les modèles de Markov cachés. Ces modèles stochastiques permettent, par une recherche du maximum de vraisemblance, d'identifier le modèle qui rend compte au mieux de la séquence de paramètres observée, et de sélectionner la référence associée à ce modèle (voir L.R. RABINER : "A Tutorial on Hidden Markov Models and Selected Applications in Speech Recognition", Proceedings of the IEEE, Vol. 77, No. 2, février 1989, pages 257-285).

L'unité d'apprentissage est utilisée pour déterminer les paramètres qui seront stockés dans le dictionnaire et utilisés en phase de reconnaissance. En général, le système demande à l'utilisateur de prononcer plusieurs fois chaque mot ou segment de parole devant être associé à une référence. A partir de ces différentes observations, l'unité d'apprentissage estime les paramètres de modèle devant être stockés dans le dictionnaire. Dans le cas où le dictionnaire contient des modèles stochastiques, cette estimation revient généralement à effectuer des calculs de moyenne et de variance.

L'apprentissage est une phase très importante qui influence fortement les performances de la reconnaissance. Un apprentissage incorrect ou insuffisant ne peut pas être totalement compensé par les bonnes performances d'un algorithme de reconnaissance.

Un utilisateur attentif s'efforce d'effectuer l'apprentissage dans un environnement silencieux, de conserver une élocution constante et d'éviter les bruits parasites (bruits de bouche, respiration, autres bruits extérieurs...). Mais beaucoup d'utilisateurs, non sensibilisés à ces problèmes, risquent, après un apprentissage réalisé dans de mauvaises conditions, d'obtenir des performances non conformes à celles attendues et de rejeter le système.

Pour rendre plus robuste cette phase d'apprentissage, on peut augmenter le nombre de prononciations requises pour créer un modèle de référence. On peut ainsi prendre en compte les variabilités de prononciation, car les estimations des paramètres reposent alors sur une statistique plus riche. L'inconvénient de cette solution est son manque d'ergonomie, l'utilisateur étant amené à prononcer chaque mot un trop grand nombre de fois.

Une autre solution consiste à rendre plus robustes les paramètres employés pour représenter les formes vocales. Cette solution ne permet pas de résoudre des problèmes tels que la prise en compte d'un mot intrus (prononcé par une autre personne ou par l'utilisateur lui-même) lors de la phase d'apprentissage.

La demande de brevet européen 0 762 709 décrit un procédé d'apprentissage dans lequel un test de reconnaissance est exécuté sur la première prononciation du nouveau mot par l'utilisateur. Si un autre mot du dictionnaire de références est reconnu lors de ce test, l'utilisateur est averti que le mot qu'il vient de prononcer est trop semblable à un autre mot du dictionnaire. Si le test ne conduit pas à la reconnaissance d'un autre mot du dictionnaire, l'utilisateur est invité à répéter le nouveau mot. Les traitements effectués sur les répétitions ne font pas intervenir de test de reconnaissance. Un modèle de rejet ("garbage model") est simplement utilisé pour "expliquer" des portions de parole qui ne font pas partie du nouveau modèle de mot précédemment formé. En d'autres termes, le modèle en cours d'élaboration et le modèle de rejet sont utilisés pour réaliser une segmentation appropriée afin de filtrer des sons éventuellement émis par un utilisateur hésitant ou maladroit. Avec cette segmentation, le modèle en cours d'apprentissage est mis à jour puis examiné pour vérifier si la mise à jour s'est déroulée dans de bonnes conditions. Contrairement au test exécuté sur la première prononciation du mot, cette vérification de la "bonne" mise à jour n'inclut aucun test de reconnaissance sur la base de l'ensemble du dictionnaire, y compris les mots précédemment appris.

Un but de la présente invention est de permettre de réaliser un apprentissage de bonne qualité à partir d'un nombre relativement faible de prononciations des mots à mémoriser.

L'invention propose ainsi un procédé d'apprentissage, pour un système de reconnaissance de parole mettant en oeuvre des tests de reconnaissance, chaque test de reconnaissance faisant correspondre un segment de parole fourni au système avec au moins un jeu de paramètres associé à une référence et mémorisé dans un dictionnaire de références. Le procédé d'apprentissage comprend, pour un jeu de paramètres à mémoriser dans le dictionnaire en association avec une référence, l'obtention de plusieurs segments de parole successivement prononcés par un locuteur et le traitement de ces segments de parole pour estimer ledit jeu de paramètres. Il comprend plus particulièrement les étapes suivantes :
/a/ on estime une version provisoire dudit jeu de paramètres sur la base d'au moins un des segments de parole ;
/b/ on mémorise ladite version provisoire dans le dictionnaire en association avec la référence ; et
/c/ on soumet au moins un des segments de parole à un test de reconnaissance, et on modifie la version provisoire mémorisée d'une manière dépendante du fait que ce test de reconnaissance fasse correspondre ou non ledit segment de parole avec ladite version provisoire.

L'utilisation des tests de reconnaissance pendant la phase d'apprentissage permet de discriminer les élocutions nettes et celles affectées de bruits parasites. Ces dernières peuvent être éliminées pour effectuer les calculs des paramètres à stocker dans le dictionnaire, sans que pour autant l'utilisateur ait à recommencer complètement l'apprentissage pour le mot ou segment de parole en question. Le nombre de prononciations requises peut donc rester limité, la structure existante du dictionnaire étant prise en compte pour accepter une certaine variabilité d'élocution de la part de l'utilisateur.

Dans un mode de réalisation avantageux, l'estimation de l'étape /a/ est effectuée sur la base d'un nombre n, au moins égal à un, de segments de parole prononcés en premier par le locuteur, et on requiert que le locuteur prononce au moins un segment de parole supplémentaire. L'étape /c/ est exécutée pour chaque segment supplémentaire ainsi requis de façon à mettre à jour la version provisoire mémorisée dans le dictionnaire à la condition que le test de reconnaissance fasse correspondre ledit segment supplémentaire avec la version provisoire du jeu de paramètres. La mise à jour de la version provisoire mémorisée est ainsi effectuée au fur et à mesure des segments de parole supplémentaires prononcés par le locuteur.

Dans un autre mode de réalisation, l'estimation de l'étape /a/ est effectuée sur la base d'un nombre m, au moins égal à deux, de segments de parole initialement prononcés par le locuteur, et l'étape /c/ est exécutée pour certains au moins desdits m segments de parole, de façon notamment à éliminer des segments qui seraient affectés de bruits parasites.

D'autres particularités et avantages de la présente invention apparaîtront dans la description ci-après d'exemples de réalisation non limitatifs, en référence aux dessins annexés, dans lesquels :
- la figure 1 est un schéma synoptique d'un système de reconnaissance mettant en oeuvre la présente invention ; et
- la figure 2 est un organigramme d'une procédure pouvant être mise en oeuvre par l'unité d'apprentissage du système de la figure 1.

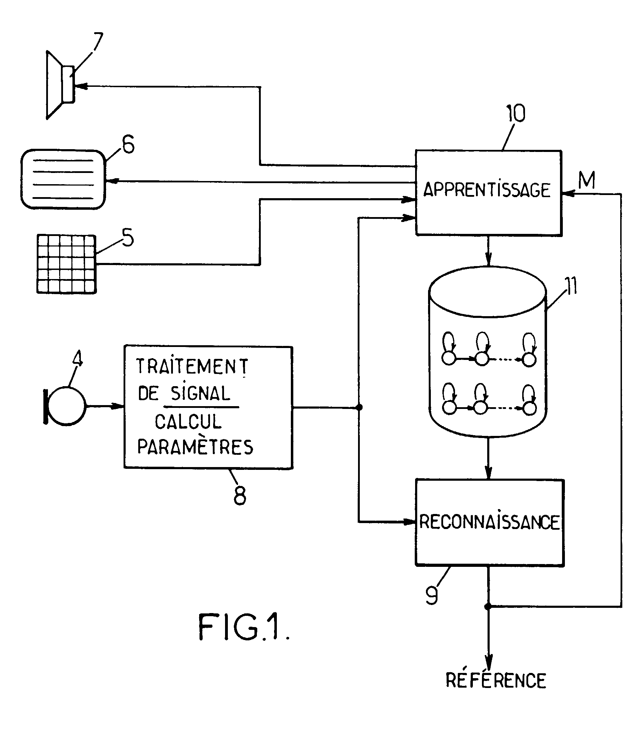

Le système de reconnaissance de parole représenté sur la figure 1 a une interface utilisateur constituée par un microphone 4, un clavier 5, un écran d'affichage 6 et un haut-parleur 7.

Les signaux acoustiques délivrés par le microphone 4 sont fournis à une unité 8 de traitement de signal qui fournit les paramètres pertinents à l'unité de reconnaissance 9 et à l'unité d'apprentissage 10.

Le clavier 5, l'écran 6 et le haut-parleur 7 servent notamment au dialogue entre l'utilisateur et l'unité d'apprentissage 10.

Le système de reconnaissance comprend encore une mémoire 11 constituant un dictionnaire de références. Dans ce dictionnaire, l'unité d'apprentissage 10 enregistre des modèles en association avec des références. En phase de reconnaissance, l'unité 9 analyse les paramètres fournis par l'unité 8 et leur fait correspondre un modèle, c'est-à-dire un jeu de paramètres mémorisés dans le dictionnaire 11, et délivre la référence associée en tant que sortie du système de reconnaissance. Cette référence peut alors être utilisée par l'équipement dont fait partie le système de reconnaissance.

A titre d'exemple illustratif, cet équipement peut être un terminal téléphonique de type mains-libres dans lequel le système de reconnaissance est utilisé pour commander des fonctions telles que la numérotation automatique, en réponse à des noms de correspondants et/ou à des mots de commande prononcés par l'utilisateur. Le microphone 4, le clavier 5, l'écran 6 et le haut-parleur 7 peuvent être ceux que le terminal téléphonique comporte par ailleurs.

Divers types de paramètres représentatifs des structures vocales, calculés par l'unité 8, peuvent être utilisés dans le cadre de la présente invention. A titre d'exemple, ils peuvent être des coefficients cepstraux en racine. Pour des explications détaillées sur ce type de représentation, il est fait référence à la demande de brevet européen 0 621 582. L'unité 8 de traitement de signal peut ainsi effectuer les opérations suivantes :
- numérisation du signal fourni par le microphone 4 ;
- division du signal numérique en trames successives, par exemple de durée 16 ms ;
- détection d'activité vocale pour distinguer les trames de parole des trames de signal ne comportant que du bruit ;
- transformée de Fourier de chaque trame de parole pour obtenir un spectre X(ω), éventuellement soumis à un débruitage par soustraction spectrale d'estimations du bruit (voir EP-A-0 534 837) ;
- application d'une fonction de compression en racine (ou d'une fonction puissance) pour calculer les |X(ω)|^{γ}, où γ représente un exposant, fixe ou adaptatif, compris entre 0 et 2 (on peut également utiliser une fonction de compression logarithmique) ;
- transformation de Fourier inverse des quantités |X(ω)|^{γ} pour obtenir des coefficients dits cepstraux, formant un vecteur de p coefficients (par exemple p≈20). Ce vecteur cepstral est fourni par l'unité 8 relativement à la trame en question.

Chaque séquence de trames consécutives détectées comme supportant une activité vocale correspond normalement à un segment de parole prononcé par un locuteur. Pour chacun de ces segments, l'unité 8 délivre une séquence de vecteurs cepstraux que peuvent traiter les unités 9 et 10.

Dans l'exemple de réalisation décrit ici, chaque référence du dictionnaire 11 est associée à un modèle de Markov caché caractérisé par un nombre d'états et, pour chaque état, par une loi de densité de probabilité d'observation des vecteurs cepstraux. Ces lois sont par exemple des lois gaussiennes de dimension p. Elles sont alors définies chacune par une moyenne (vecteur) et par une variance (matrice).

Un test de reconnaissance effectué par l'unité 9, sur la base d'une séquence de vecteurs cepstraux obtenus à partir d'un segment de parole traité par l'unité 8, consiste à identifier celui des modèles du dictionnaire de référence 11 qui maximise la vraisemblance de l'observation de ladite séquence de vecteurs cepstraux. Un moyen classique pour effectuer cette identification est d'utiliser l'algorithme de Viterbi. Pour différents modèles du dictionnaire, un treillis de Viterbi permet de déterminer la séquence d'états qui maximise la probabilité d'observation de la séquence de vecteurs cepstraux. Le modèle pour lequel la probabilité maximisée est la plus grande est finalement retenu, et la référence associée est délivrée par l'unité de reconnaissance 9.

Certains des modèles contenus dans le dictionnaire 11 sont des modèles de rejet artificiellement construits pour être préférentiellement retenus par l'unité 9 lorsque le segment de parole soumis au test de reconnaissance ne correspond à aucun des mots référencés dans le dictionnaire.

La phase d'apprentissage consiste à calculer les paramètres des lois de probabilité associées aux modèles de Markov cachés. Pour chaque référence à mémoriser, l'utilisateur est invité à prononcer plusieurs fois le mot associé afin de fournir à l'unité 10 une statistique d'observation suffisante pour lui permettre d'évaluer de façon fiable les paramètres des lois de probabilité relatives aux différents états du modèle.

Les méthodes utilisées pour procéder à ces estimations sont classiques. On pourra à cet égard se référer à l'article précité de L.R. RABINER.

Parmi les différentes prononciations du mot, certaines peuvent être perturbées par des bruits parasites. Il convient de les ignorer dans les estimations des paramètres du modèle, sans quoi ces estimations ne seraient pas fiables. La nécessité d'un grand nombre de répétitions du mot est à éviter dans la mesure où elle tendrait à rendre l'utilisation du système très fastidieuse.

Pour filtrer ainsi ces répétitions affectées de parasites, l'invention utilise des tests de reconnaissance semblables à ceux effectués en phase de reconnaissance.

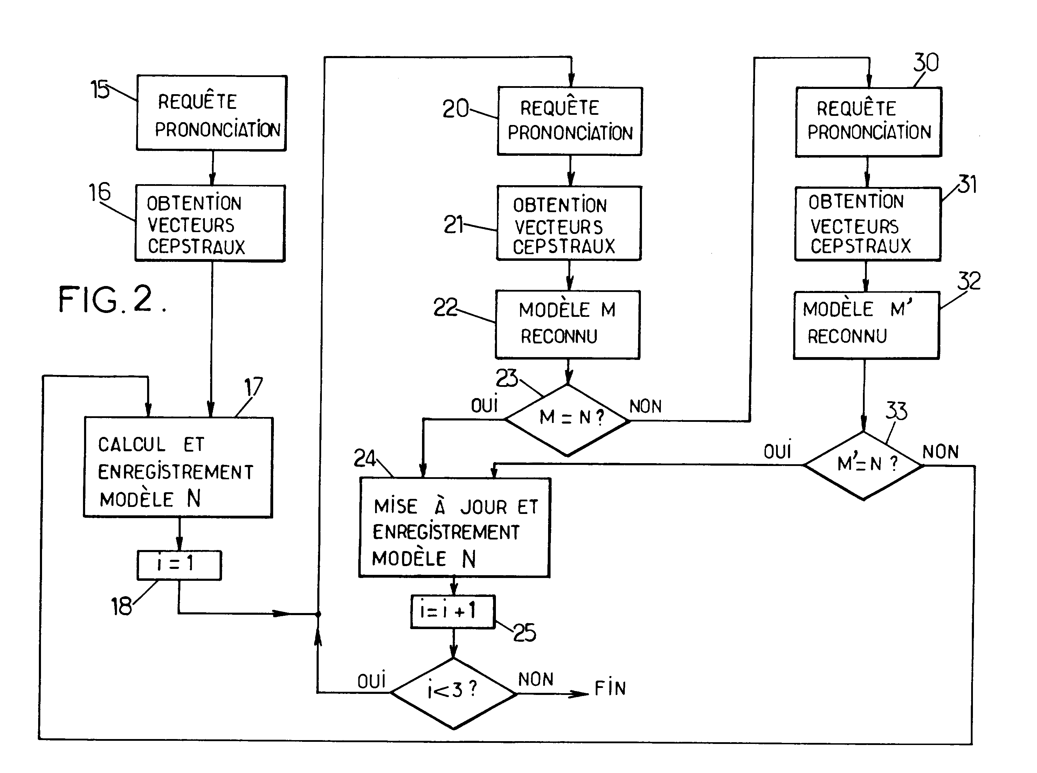

A titre d'exemple, l'apprentissage relatif à une nouvelle référence peut être effectué en trois passes, selon la procédure représentée sur la figure 2.

Dans cet exemple, on considère que le dictionnaire de références 11 contient déjà N-1 modèles de mots associés à des références, ainsi qu'un ou plusieurs modèles de rejet. Une fois que l'utilisateur a initialisé, à l'aide du clavier 5, une procédure de création d'un nouveau modèle, l'unité 10 l'invite, par un message affiché sur l'écran 6 et/ou par un signal sonore produit par le haut-parleur 7, à prononcer une première fois le mot considéré (étape 15).

Une fois que l'utilisateur a prononcé le mot, l'unité 8 de traitement de signal fournit à l'unité 10 la séquence de vecteurs cepstraux correspondants (étape 16). A ce moment, l'unité 10 calcule les paramètres caractéristiques du nouveau modèle N selon toute méthode appropriée (par exemple celle décrite dans l'article précité de L.R. RABINER), et enregistre ce jeu de paramètres dans le dictionnaire 11 en relation avec la référence correspondante (étape 17). Cette référence peut être simplement constituée par l'adresse d'écriture du jeu de paramètres dans la mémoire 11. Le jeu de paramètres enregistré à l'étape 17 est une version provisoire qui devra être mise à jour à l'aide de deux autres prononciations du mot non affectées de parasites. L'étape 18 représentée sur la figure 2 consiste à initialiser à 1 la variable i qui représente le nombre de prononciations du mot sur la base desquelles la version provisoire du jeu de paramètres stockée dans le dictionnaire 11 a été estimée.

L'unité 10 commande alors l'affichage d'un nouveau message sur l'écran 6 et l'émission d'un nouveau signal sonore par le haut-parleur 7 pour demander à l'utilisateur de répéter le mot (étape 20) . Après cette nouvelle prononciation et l'obtention des vecteurs cepstraux correspondants (étape 21), un test de reconnaissance est effectué par l'unité 9 sur la base de cette séquence de vecteurs cepstraux (étape 22).

La référence du modèle M reconnu par l'unité 9 est fournie à l'unité d'apprentissage 10 qui examine alors, à l'étape 23, si le modèle reconnu est le même que celui pour lequel le processus de création du jeu de paramètres est en cours. C'est seulement si ce modèle N en cours de construction est bien reconnu que l'unité d'apprentissage 10 procède à la mise à jour de la version provisoire des paramètres du modèle N et à l'enregistrement de la nouvelle version dans le dictionnaire 11.

Cette mise à jour (étape 24) consiste à affiner les estimations des moyennes, et éventuellement des variances, des densités de probabilité des états du modèle, par la prise en compte des nouvelles observations des vecteurs cepstraux en plus de celles ayant contribué au calcul de la version provisoire du modèle. Après cette mise à jour, la variable i est incrémentée d'une unité (étape 25) et, si i<3, l'unité 10 revient à l'étape 20 pour obtenir et traiter de la même manière la prochaine répétition du mot.

Quand i=3, la création du modèle N est terminée, et la version provisoire du jeu de paramètres enregistré devient définitive. L'unité 10 peut prévenir l'utilisateur que l'apprentissage du mot est terminé, par exemple en commandant le haut-parleur 7 pour qu'il émette un signal sonore suivi par une restitution de la dernière répétition du mot.

Lorsque, pour l'une des répétitions du mot, le modèle N en cours de création n'est pas reconnu par l'unité 9, l'unité d'apprentissage 10 requiert une autre répétition du mot (étape 30). Après obtention des vecteurs cepstraux correspondants (étape 31) et de la référence du modèle M' reconnu par l'unité 9 (étape 32), l'unité 10 examine si ce modèle M' est le même que celui en cours de création (étape 33) . Dans l'affirmative, il est vraisemblable que l'avant-dernière prononciation du mot ait été perturbée par des bruits parasites, la dernière et l'antépénultième étant cohérentes entre elles. Dans ce cas, l'unité 10 reprend le processus précédent à l'étape 24 en mettant à jour les paramètres du modèle en cours de création.

Cependant, si les modèles M,M' reconnus pour deux répétitions consécutives du mot par l'utilisateur diffèrent tous deux de celui N en cours de création, on estime que la version provisoire du jeu de paramètres du modèle est vraisemblablement peu fiable, de sorte qu'on supprime cette version provisoire. A la place, l'unité 10 calcule un nouveau jeu de paramètres sur la base de la dernière répétition du mot, c'est-à-dire avec les vecteurs cepstraux obtenus à l'étape 31. Deux répétitions supplémentaires (ou davantage si de nouvelles incohérences apparaissent) seront demandées à l'utilisateur. Sur l'organigramme de la figure 2, ceci correspond au fait que l'unité d'apprentissage 10 revient à l'étape 17.

Les tests de reconnaissance effectués en phase d'apprentissage permettent de filtrer des prononciations affectées de parasites sans imposer à l'utilisateur de recommencer obligatoirement la totalité des trois prononciations requises. Le système reste donc assez ergonomique en apprentissage.

L'utilisation des tests de reconnaissance permet de tolérer une certaine variabilité d'élocution en phase d'apprentissage, ce qui améliore encore l'ergonomie. Ceci permet en outre une meilleure construction des modèles de Markov, grâce à l'enrichissement de la statistique d'observation des vecteurs cepstraux. Une solution différente consisterait à décider d'accepter ou non une répétition du mot sur la seule base d'un critère de vraisemblance : les vecteurs cepstraux obtenus pour la répétition seraient présentés à un treillis de Viterbi correspondant à la seule version provisoire du modèle, et la vraisemblance du meilleur chemin dans le treillis serait comparée à un seuil pour décider d'accepter ou non la répétition. L'inconvénient de cette autre solution est la difficulté de définir un seuil adéquat. Un tel critère ne fait pas de différence entre une variabilité normale de l'élocution et des parasites indésirables, de sorte qu'un critère trop sévère conduit à des rejets fréquents et nuit à l'ergonomie, tandis qu'un critère trop tolérant affecte la qualité de l'apprentissage. La présente invention procure à cet égard un bon compromis grâce à la prise en compte des mots déjà appris dans le test de reconnaissance.

On notera que l'exemple de la figure 2 n'illustre qu'une stratégie possible de l'utilisation des tests de reconnaissance en phase d'apprentissage conformément à l'invention. De nombreux autres scénarios pourraient être pris en compte par l'unité d'apprentissage 10, tels que par exemple :
- lorsque qu'à la fois la seconde et la troisième prononciation d'un mot conduisent à reconnaître un modèle différent de celui créé lors de la première prononciation de ce mot, on pourrait créer un autre modèle à partir des vecteurs cepstraux obtenus à partir de l'une de ces deux répétitions, et examiner si cet autre modèle est ou non reconnu en soumettant l'autre de ces deux répétitions à un test de reconnaissance. Il faut alors garder en mémoire une séquence de vecteurs cepstraux supplémentaire ; mais cela peut permettre que l'utilisateur ait une répétition de moins à effectuer ;
- le nombre de prononciations requises pour créer et valider un modèle pourrait être différent de trois, et le nombre d'échecs de reconnaissance consécutifs à constater pour abandonner la version provisoire des paramètres pourrait être plus grand que deux. D'autre part, le nombre n de prononciations requises avant le premier calcul du modèle provisoire pourrait être plus grand que un ;
- si les tests de reconnaissance effectués par l'unité 9 fournissent non seulement le meilleur modèle, au sens du maximum de vraisemblance, mais une liste des Q meilleurs modèles (*Q*≥2), le modèle N en cours de création pourrait être considéré comme reconnu, aux étapes 22 et 32, s'il appartient à cette liste sans nécessairement y figurer en tête.

Une autre possibilité intéressante procurée par l'invention est que l'unité d'apprentissage 10 examine si un même modèle de mot stocké dans le dictionnaire 11, mais différent du modèle N en cours de création, est reconnu plusieurs fois par l'unité 9 au cours de l'apprentissage du même mot nouveau. Dans ce cas, l'unité 10 peut adresser à l'utilisateur un message lui indiquant un risque de confusion, le mot en cours d'apprentissage étant proche d'un mot précédemment appris. L'utilisateur peut alors cesser l'apprentissage en cours, et le recommencer en substituant un autre mot, pour éviter que se produisent ultérieurement de fréquentes erreurs d'interprétation du mot. Ce message est délivré au locuteur lorsqu'au moins deux tests de reconnaissance effectués en phase d'apprentissage sur des segments de parole différents, correspondants à deux prononciations du même mot, font correspondre ces deux segments avec le même modèle du dictionnaire qui n'est pas le modèle en cours de création.

On prévoit avantageusement qu'un test de reconnaissance soit également effectué sur la base du segment correspondant à la première prononciation du mot (ou aux n premières), c'est-à-dire après l'étape 16 sur la figure 2. Dans ce cas, si le modèle ainsi reconnu est un modèle de mot (et non un modèle de rejet) et si ce même modèle est de nouveau reconnu pour une répétition ultérieure (étape 22 ou 32), alors le message préviendra l'utilisateur du risque de confusion.

Dans un autre mode de réalisation, l'utilisateur est d'abord invité à prononcer un certain nombre de fois le mot à mémoriser. Ce nombre m est par exemple de 3 ou 4. Les paramètres du modèle provisoire sont d'abord calculés sur la base des m séquences de paramètres cepstraux obtenus pour les m prononciations. Ensuite, chacune de ces séquences est soumise à tour de rôle au test de reconnaissance. Pour chacun de ces m tests, si le modèle en cours de création est reconnu, l'estimation des paramètres du modèle peut éventuellement être modifiée, par exemple en affinant la segmentation des vecteurs cepstraux de la séquence entre les états du modèle de Markov. Si, en revanche, le modèle en cours de création n'est pas reconnu, l'estimation des paramètres du modèle est modifiée, par exemple en éliminant de la statistique d'observation les données relatives à la séquence soumise au test de reconnaissance et en réestimant les moyennes et/ou les variances des lois de probabilité relatives aux états du modèle. Si un trop grand nombre des m tests conduisent à une non-reconnaissance du modèle provisoire, l'utilisateur peut être invité à répéter m fois le mot.

## Revendications

1. Procédé d'apprentissage, pour un système de reconnaissance de parole mettant en oeuvre des tests de reconnaissance, chaque test de reconnaissance faisant correspondre un segment de parole fourni au système avec au moins un jeu de paramètres associé à une référence et mémorisé dans un dictionnaire de références (11), le procédé d'apprentissage comprenant, pour un jeu de paramètres à mémoriser dans le dictionnaire en association avec une référence, l'obtention de plusieurs segments de parole successivement prononcés par un locuteur et le traitement de ces segments de parole pour estimer ledit jeu de paramètres, et étant caractérisé par les étapes suivantes :
/a/ on estime une version provisoire dudit jeu de paramètres sur la base d'au moins un des segments de parole ;
/b/ on mémorise ladite version provisoire dans le dictionnaire en association avec la référence ; et
/c/ on soumet au moins un des segments de parole à un test de reconnaissance, et on modifie la version provisoire mémorisée d'une manière dépendante du fait que ce test de reconnaissance fasse correspondre ou non ledit segment de parole avec ladite version provisoire.

2. Procédé d'apprentissage selon la revendication 1, dans lequel l'estimation de l'étape /a/ est effectuée sur la base d'un nombre n, au moins égal à un, de segments de parole prononcés en premier par le locuteur, dans lequel on requiert que le locuteur prononce au moins un segment de parole supplémentaire, et dans lequel l'étape /c/ est exécutée pour chaque segment supplémentaire ainsi requis de façon à mettre à jour la version provisoire mémorisée dans le dictionnaire (11) à la condition que le test de reconnaissance fasse correspondre ledit segment supplémentaire avec la version provisoire du jeu de paramètres, la mise à jour de la version provisoire mémorisée étant effectuée au fur et à mesure des segments de parole supplémentaires prononcés par le locuteur.

3. Procédé d'apprentissage selon la revendication 2, dans lequel chacun des n premiers segments de parole est également soumis à un test de reconnaissance.

4. Procédé d'apprentissage selon la revendication 2 ou 3, dans lequel, lorsqu'au moins deux tests de reconnaissance effectués sur des segments de parole différents font correspondre ces segments de parole avec un même jeu de paramètres du dictionnaire (11) autre que ladite version provisoire, on délivre au locuteur un message signalant un risque de confusion.

5. Procédé d'apprentissage selon l'une quelconque des revendications 2 à 4, dans lequel la version provisoire du jeu de paramètres est définitivement enregistrée dans le dictionnaire (11), en association avec la référence, après qu'elle a été mise à jour un nombre déterminé de fois.

6. Procédé d'apprentissage selon l'une quelconque des revendications 2 à 5, dans lequel, lorsque la condition de l'étape /c/ n'est remplie pour aucun de deux segments de parole consécutifs, on remplace la version provisoire mémorisée par une nouvelle version provisoire du jeu de paramètres, estimée sur la base de l'un et/ou l'autre desdits segments de parole consécutifs.

7. Procédé d'apprentissage selon la revendication 1, dans lequel l'estimation de l'étape /a/ est effectuée sur la base d'un nombre m, au moins égal à deux, de segments de parole initialement prononcés par le locuteur, et dans lequel l'étape /c/ est exécutée pour certains au moins desdits m segments de parole.

8. Procédé d'apprentissage selon l'une quelconque des revendications précédentes, dans lequel, les jeux de paramètres mémorisés dans le dictionnaire de références (11) définissent des modèles de Markov cachés.

9. Procédé d'apprentissage selon l'une quelconque des revendications précédentes, dans lequel, après avoir terminé d'estimer ledit jeu de paramètres à l'aide de segments de parole prononcés par le locuteur, on effectue une restitution sonore de l'un de ces segments de parole.
